# EUROPÄISCHE PATENTSCHRIFT

(11) **EP 1 385 145 B1**
(45) Veröffentlichungstag und Bekanntmachung des Hinweises auf die Patenterteilung: **13.09.2006**
(21) Anmeldenummer: 02016557.7
(22) Anmeldetag: 24.07.2002
(51) Int. Cl.: G10G 5/00

(54) **Musikinstrumentenständer**
Support for musical instruments
Support pour instruments de musique

(43) Veröffentlichungstag der Anmeldung: 28.01.2004
(73) Patentinhaber: Wilfer, Hans-Peter, 08258 Markneukirchen (DE)
(72) Erfinder: Wilfer, Hans-Peter, 08258 Markneukirchen (DE)
(74) Vertreter: Meissner, Bolte & Partner

(56) Entgegenhaltungen:
- EP-A- 0 823 582
- DE-U- 20 013 527
- US-A- 5 836 552
- US-B1- 6 316 706
- US-B1- 6 323 406

## Beschreibung

Die Erfindung betrifft einen Musikinstrumentenständer, insbesondere für Gitarren, umfassend ein erstes Seitenteil sowie ein zweites Seitenteil, jeweils mit einer Unterseite und einer Oberseite, wobei erstes und zweites Seitenteil jeweils Fußelemente zum Abstellen des Gitarrenständers auf einer Bodenfläche umfassen und wobei erstes und zweites Seitenteil im Bereich ihrer Oberseiten jeweils erste und zweite Gelenkelemente umfassen, die ein Schwenkgelenk definieren, derart, dass die Seitenteile um eine vorgegebene Schwenkachse gegeneinander verschwenkbar sind, wobei im Bereich der Gelenkelemente Rastmittel vorgesehen sind, welche den Gitarrenständer in mindestens einer Schwenkposition rastend festlegen.

Ein derartiger Musikinstrumentenständer ist bereits aus der GB 2 276 314 A bekannt. Dieser bekannte Gitarrenständer ist relativ aufwendig mit einer Vielzahl von gegeneinander beweglichen Teilen ausgestaltet. Darüber hinaus besteht der Wunsch, gegenüber diesen Gitarrenständer den Aufstellvorgang zu erleichtern und gleichzeitig einen sicheren Stand des Gitarrenständers zu gewährleisten.

Ein weiterer Gitarrenständer der gattungsgemäßen Art ist aus der DE 44 37 200 C2 bekannt. Bei dem dort beschriebenen Gitarrenständer ist der Aufstellvorgang ebenfalls umständlich, da nach Verschwenken des ersten und zweiten Seitenteils in einer Aufstellposition ein Verbindungsbügel im Bereich der Fußelemente zwischen erstem und zweiten Seitenteil in Wirkposition gebracht werden muss, was den Aufstellprozess zusätzlich verkompliziert.

Weiterhin wird in US 5 836 552 A ein Musikinstrumentenständer offenbart, der zum einen aus einer Vielzahl von beweglichen Teilen gebildet und bei dem zum anderen der Winkel, den die beiden Seitenteile in der vom Benutzer einzustellenden Aufstellposition einschließen, dadurch festgelegt wird, dass der Benutzer einen Einstelldrehknopf festdreht, wobei mittels der Formgebung der beiden Seitenteile im Verbindungsgelenkbereich sichergestellt ist, dass dieser Winkel einen maximalen Wert nicht überschreitet kann.

In EP 0 823 582 wird ebenfalle ein Musikinstrumentenständer offenbart.

Außerdem offenbart DE 200 13 527 U1 einen Gitarrenständer, der als wesentliche Bauteile ein Hauptrohr und zwei sog. Beinrohre umfasst, wobei an jedem Beinrohr jeweils eine Gelenkhälfte angebracht ist. Um einen aus DE 200 13 527 U1 bekannten Gitarrenständer, der zunächst in zusammengeklapptem Zustand vorliegt, funktionsgemäß für die Halterung einer abgestellten Gitarre zu gebrauchen, ist der Benutzer genötigt, den Gitarrenständer aufzustellen. Dabei ist es notwendig, dass die beiden Beinrohre, die über ein Gelenk miteinander verbunden sind, um einen Winkel gegeneinander verschwenkt werden, wobei der Winkel genau so eingestellt werden muss, dass ein Verriegelungsknopf (23) in zwei genau fluchtend übereinanderliegenden Kerben (322, 422) der beiden Gelenkhälften eingeführt werden kann. Die Aufstellung eines derartigen Gitarrenständers verlangt vom Benutzer also ein beträchtliches Maß an Konzentration, Geschick und Übung.

Die Aufgabe der vorliegenden Erfindung besteht gegenüber dem vorbekannten Stand der Technik darin, einen Musikinstrumentenständer der gattungsgemäßen Art zu schaffen, der sich wesentlich einfacher aufstellen lässt und darüber hinaus vergleichsweise einfach herstellbar ist. Diese Aufgabe wird mit einem Musikinstrumentenständer nach den Merkmalen des Anspruchs 1 gelöst. Vorteilhafte Weiterbildungen sind in den Unteransprüchen angegeben.

Ein Kerngedanke der vorliegenden Erfindung besteht dabei darin, dass die beiden Seitenteile des Musikinstrumentenständers in einer vorgegebenen Schwenkposition allein durch Rastmittel arretiert werden, wobei die Rastmittel im Bereich der Gelenkelemente vorgesehen sind und die Rastmittel ein aufnehmendes Rastmittel mit mindestens einer Rastausnehmung sowie ein vorstehendes Rastmittel mit mindestens einem Rastvorsprung aufweisen. Der so geschaffene Musikinstrumentenständer lässt sich bei dennoch einfacher Herstellung wesentlich unkomplizierter aufstellen bzw. zusammenklappen.

In einer vorteilhaften Weiterbildung lässt sich der Gitarrenständer mit der erfindungsgemäßen Lösung auch in einer Mehrzahl unterschiedlicher Schwenkpositionen festlegen. Dies wird dadurch erreicht, dass die Rastmittel eine Mehrzahl von Rastpositionen definieren, die vorzugsweise äquidistant beabstandet sind, so dass der Gitarrenständer in entsprechenden Schwenkwinkelpositionen festlegbar ist.

Mit der erfindungsgemäßen Lösung lässt sich ein besonders gut transportabler, leichter und rasch aufzubauender bzw. abzubauender Gitarrenständer schaffen. Eine besonders kompakte Transportstellung wird geschaffen, wenn erstes und zweites Seitenteil in einer Schwenkposition (Ruheposition) im wesentlichen parallel zueinander ausgerichtet und dabei minimal beabstandet sind. Es ergibt sich dadurch eine äußerst flache Einheit, die sich zu Transportzwecken gut verstauen lässt.

In einer speziellen Ausgestaltung sind über die erfindungsgemäß vorgesehene Rastmittel hinaus Schwenkwinkelbegrenzungsmittel im Bereich der Gelenkelemente, insbesondere an den Rastmitteln oder an den Lagerungselementen des Schwenkgelenks vorgesehen, um ein Ausklappen des Gitarrenständers über einen vorgegebenen maximalen Öffnungswinkel hinaus zu verunmöglichen. Prinzipiell wird bereits durch die entsprechende Ausbildung der Rastmittel sichergestellt, dass der Musikinstrumentenständer in einer gewählten Schwenkwinkelposition ausreichend stabil arretiert ist. Durch die Schwenkwinkelbegrenzungsmittel kann eine zusätzliche unüberwindbare Begrenzung vorgesehen werden, die einen maximalen Schwenkwinkel definiert.

In einer konkreten, bevorzugten Ausgestaltung ist mindestens eines der Rastmittel sich entlang eines zur Schwenkachse konzentrischen Kreisbogenabschnittes erstreckend ausgebildet und angeordnet. In diesem Fall kann das Rastmittel mehrere Rastpositionen definieren, die durch ein zugeordnetes Gegenrastmittel bei Verschwenken der Seitenteile jeweils zugänglich sind.

In einer besonders bevorzugten Ausführungsform ist das mit Rastausnehmungen versehene Rastmittel als Rastnut und das mit Rastvorsprüngen versehene Rastmittel als Rastnase ausgebildet, wobei die Rastnase in der Rastnut geführt ist. Diese Ausgestaltung bewirkt einen sehr definierten Rasteingriff. Darüber hinaus kann eine derartige Ausgestaltung die Stabilität des Gelenkes unterstützen.

In der konkreten, bevorzugten Ausführungsform der vorliegenden Erfindung sind die Rastmittel von der Schwenkachse des Schwenkgelenks weniger als 20 cm, vorzugsweise weniger als 15 cm beabstandet. Dadurch ergibt sich ein relativ einfacher, ergonomischer Aufbau des Musikinstrumentenständers. Der Musikinstrumentenständer benötigt weniger bewegliche Teile als beim eingangs erläuterten Stand der Technik vorgesehen sind.

In einer konkreten Ausgestaltung sind Rastvorsprünge und Rastausnehmungen vorgesehen, die in einer zur Schwenkachse des Schwenkgelenks radialen Richtung miteinander verrasten.

Ergänzend oder alternativ können weiterhin Rastvorsprünge vorgesehen sein, die mit Rastausnehmungen in einer zur Schwenkachse parallelen Richtung miteinander verrasten.

In einer konkret vorgeschlagenen Lösung sind an zwei Seitenflächen der Rastnut Rastausnehmungen vorgesehen, so dass entsprechende Rastvorsprünge an zugeordneten Seitenflächen der Rastnase mit den genannten Rastausnehmungen verrasten können. Durch entsprechende Dimensionierung der Rastnut werden die Rastvorsprünge an den Seitenflächen der Rastnase immer mit im wesentlich gleicher Vorspannung in Richtung auf die Rastausnehmungen der Rastnut gedrückt, so dass bei dieser eingreifenden bzw. umgreifenden Lösung auch nach langjähriger Benutzung des Musikinstrumentenständers sich definierte Haltekräfte sicherstellen lassen.

In einer konkreten, bevorzugten Ausgestaltung sind die Rastmittel überwiegend oder vollkommen aus Kunststoff gebildet. Die Ausbildung der Rastmittel aus Kunststoff erweist sich in der Herstellung als zweckmäßig und kostengünstig. Gleichzeitig ergibt die Ausbildung der Rastmittel aus Kunststoff eine einfache und zuverlässige Handhabung.

In einer konkreten Ausgestaltung ist an den Seitenteilen jeweils eine Ausbuchtung ausgebildet, die zusammen eine Auflage für ein abzulegenden Musikinstrument definieren. Auch im Bereich der Auflage sind daher keine weiteren separaten Bauteile erforderlich, so dass der Musikinstrumentenständer insgesamt handlich, leichtgewichtig und zuverlässig realisier- und einsetzbar ist.

Die Erfindung wird nachstehend auch hinsichtlich weiterer Merkmale und Vorteile anhand der Beschreibung von Ausführungsbeispielen und unter Bezugnahme auf die beiliegenden Zeichnung näher erläutert. Hierbei zeigen:
- Fig. 1: eine Ausführungsform eines erfindungsgemäßen Musikinstrumentenständers, insbesondere Gitarrenständer;
- Fig. 2: eine Detailansicht des in Fig. 1 dargestellten Musikinstrumentenständers;
- Fig. 3: eine perspektivische Teilschnittansicht des Musikinstrumentenständers nach Fig. 1 zur besseren Erläuterung der Funktion des Rastmittels.

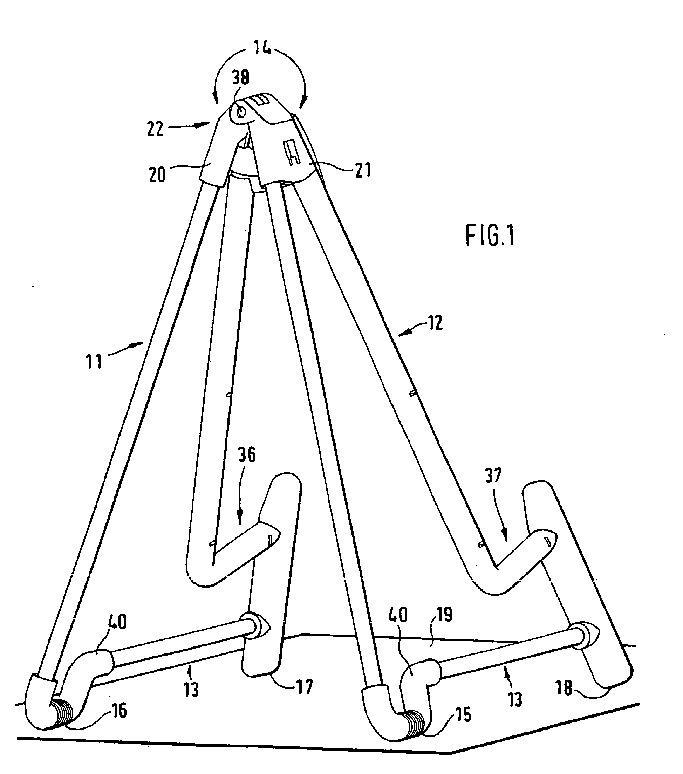

In Fig. 1 ist eine Ausführungsform des erfindungsgemäßen Musikinstrumentenständers in perspektivischer Ansicht dargestellt. Der Musikinstrumentenständer umfasst ein erstes Seitenteil 11 und ein zweites Seitenteil 12. Erstes Seitenteil 11 und zweites Seitenteil 12 weisen jeweils eine Unterseite 13 sowie eine Oberseite 14 auf. Erstes und zweites Seitenteil 11, 12 bestehen hier aus einem umlaufenden Rohrrahmen, der ganz grob einer Dreiecksform angenähert ist, wobei das erste und zweite Seitenteil jeweils eine Ausbuchtung 36, 37 aufweisen, die beide zusammen in der noch näher zu erläuternden aufgeklappten Position des Musikinstrumentenständers eine Auflage für ein Musikinstrument, insbesondere für eine Gitarre definieren.

Erstes und zweites Seitenteil 11, 12 weisen jeweils an ihrer Unterseite 13 Fußelemente 14 bis 18 auf, die durch den rohrförmigen Grundrahmen oder durch separate Bauteile gebildet sein können. Die Fußelemente 15 bis 18 sind zur Auflage auf einer Bodenfläche 19 ausgebildet und können mit einem gummierten Überzug 40 versehen sein, um die Hafteigenschaften zu verbessern und gleichzeitig Bodenunebenheiten in geringfügigem Umfang auszugleichen bzw. stoßabsorbierend wirken.

Erstes und zweites Seitenteil 11, 12 weisen jeweils an ihrer Oberseite 14 ein erstes und zweites Gelenkelement 20, 21 auf. Das erste Gelenkelement 20 des ersten Seitenteils 11 bildet mit dem zweiten Gelenkelement 21 und einer hier separat vorgesehenen Gelenkwelle 38 ein Schwenkgelenk 22 um eine Schwenkachse S, wodurch eine axiale Verschwenkbarkeit zwischen ersten Seitenteil 11 und zweiten Seitenteil 12 definiert wird. Die Gelenkwelle 38 ist bei der vorliegenden Ausführungsform als separates Bauteil; ausgebildet bei entsprechender Modifizierung des Gegengelenkelementes könnte sie aber auch integraler Bestandteil des ersten oder zweiten Gelenkelementes 20, 21 sein, wobei das Gegengelenkelement dann an der Gelenkwelle beispielsweise durch Aufklipsen nach Art einer Snap-In-Verbindung befestigt werden könnte.

Bei der hier konkret dargestellten Ausführungsform ist am ersten Gelenkelement 20 eine Rastnut 24 integral angeformt, die im montierten Zustand des Musikinstrumentenständers eine integral am zweiten Gelenkelement 21 angeformte Rastnase 23 umgreift. Rastnase 23 und Rastnut 24 bilden Rastmittel, welche verschiedene Rastpositionen 25 bis 29 umfassen und damit für den Musikinstrumentenständer verschiedene Schwenkwinkelpositionen definieren, die den Musikinstrumentenständer jeweils in einer vorbestimmten Winkelposition jeweils mit einer vorbestimmten Haltekraft festlegen. Bei Überwindung der vorbestimmten Haltekraft kann die festgelegte Rastposition 25 bis 29 außer Eingriff gebracht und der Musikinstrumentenständer in seiner Schwenkwinkellage verändert, beispielsweise weiter geöffnet oder zusammengeklappt werden.

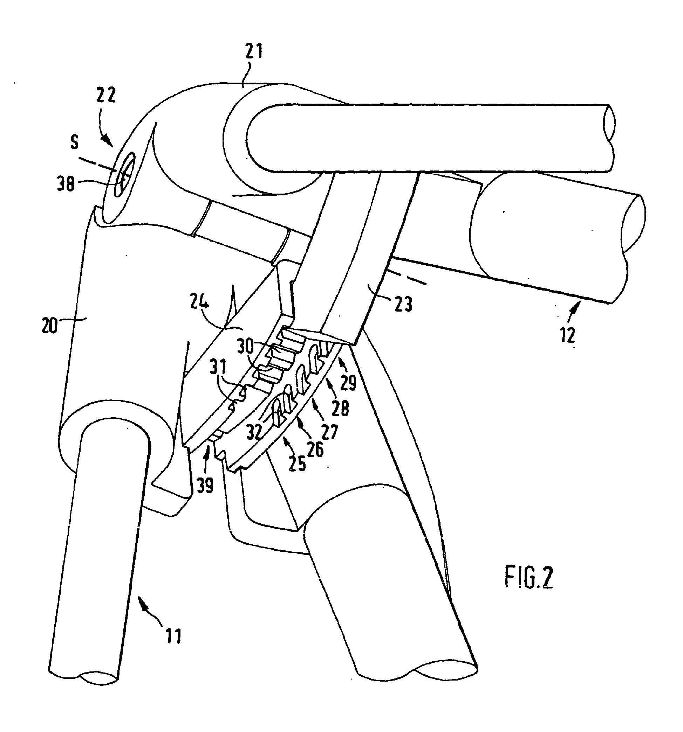

Die bei der vorliegenden, bevorzugten Ausführungsform konkret zur Anwendung gelangte Ausbildung von Rastnase 23 und Rastnut 24 wird aus Fig. 2 näher ersichtlich, die eine Detailansicht des Schwenkgelenks mit Rastnut 24 und Rastnase 23 zeigt. Die Rastnut 24, die auch als Rastkanal bezeichnet werden könnte, erstreckt sich entlang eines konzentrisch zur Schwenkachse S verlaufenden Kreisbogenabschnitts. Sie ist dabei unterhalb der Schwenkachse S am ersten Gelenkelement 20 des ersten Seitenteils 11 angeordnet und erstreckt sich in Richtung auf das zweite Gelenkelement 21 des zweiten Seitenteils 12. Entsprechend ist dann die Rastnase 23 am zweiten Gelenkelement 21 des zweiten Seitenteils 12 angeordnet und erstreckt sich in Richtung auf das erste Gelenkelement 20 des ersten Seitenteils, wobei die Rastnase 23 in die Rastnut 24 eingreift und in der Rastnut 24 geführt ist. Die bereits erwähnten Rastpositionen 25 bis 29 werden in der Rastnut durch eine Mehrzahl von Rastausnehmungen 30, 31, 32 definiert, wobei in die Mehrzahl von Rastausnehmungen 30, 31, 32 jeweils ein auf der Rastnase 23 angeordneter Rastvorsprung 33, 34 rastend eintauchen bzw. eingreifen kann.

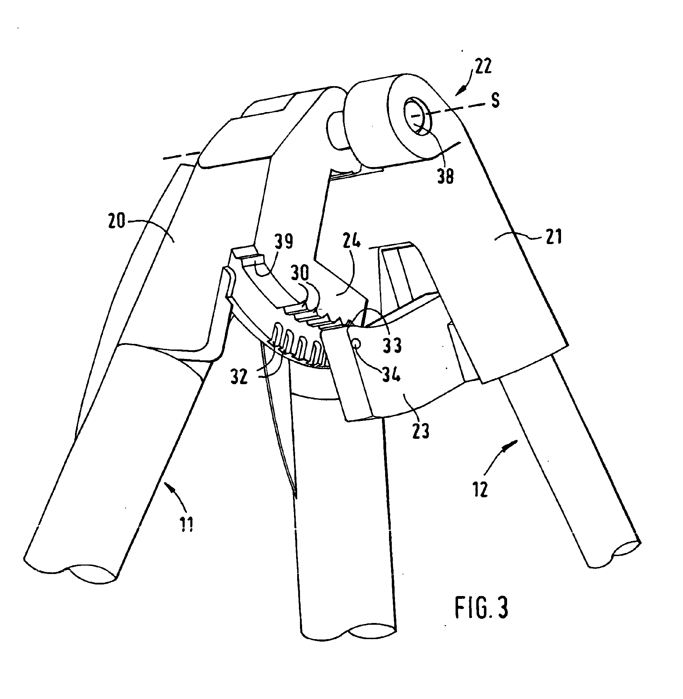

Wie aus den Fig. 2 und 3 erkennbar wird, sind verschiedene Gruppen von Rastausnehmungen 30, 31, 32 vorgesehen und zwar (zentrale) Rastausnehmungen 30 in der Basisfläche der Rastnut 24 sowie seitliche Rastausnehmungen 31, 32 in den Seitenflächen der Rastnut 24. In die zentralen Rastausnehmungen 30 greift ein auf der Rastnase 23 angeordneter Rastvorsprung 33 und in die seitlichen Rastausnehmungen 31, 32 entsprechende seitliche Rastvorsprünge 34 ein (vgl. Fig. 3).

Es kann weiterhin eine Ausgangs-Rastposition 39 vorgesehen sein, in der Rastnase 23 und Rastnut 24 komplett ineinander geschoben sind und erstes Seitenteil 11 und zweites Seitenteil 12 unter minimaler Beabstandung parallel zueinander angeordnet sind. Hierdurch wird verhindert, dass die Seitenteile 11, 12 in Transportstellung des Musikinstrumentenständers ausklappen können. Durch die Ausgangs-Rastposition 39 wird der Musikinstrumentenständer mit vorbestimmter Haltekraft in Transportstellung gehalten.

Es versteht sich von selbst, dass die konkrete Verwirklichung der Rastmittel wie in den Fig. 1 bis 3 veranschaulicht nur eine von vielen Möglichkeiten ist, um im Bereich des Schwenkgelenks 22 Rastmittel auszubilden, welche den Gitarrenständer in mindestens einer Schwenkposition rastend festlegen.

### Bezugszeichenliste

- 11: erstes Seitenteil
- 12: zweites Seitenteil
- 13: Unterseite
- 14: Oberseite
- 15-18: Fußelemente
- 19: Bodenfläche
- 20: erstes Gelenkelement
- 21: zweites Gelenkelement
- 22: Schwenkgelenk
- 23: Rastmittel, Rastnase
- 24: Rastmittel, Rastnut
- 25-29: Rastpositionen
- 30: Rastausnehmungen
- 31, 32: (seitliche) Rastausnehmungen
- 33: Rastvorsprung
- 34: (seitliche) Rastvorsprünge
- 36, 37: Ausbuchtung
- 38: Gelenkwelle
- 39: Ausgangs-Rastposition
- 40: gummierter Überzug
- S: Schwenkachse

## Patentansprüche

1. Musikinstrumentenständer, insbesondere für Gitarren umfassend ein erstes Seitenteil (11) sowie ein zweites Seitenteil (12), mit jeweils einer Unterseite (13) und einer Oberseite (14),
wobei erstes und zweites Seitenteil (11, 12) jeweils Fußelemente (15 bis 18) zum Abstellen des Gitarrenständer auf einer Bodenfläche (19) umfassen und wobei erstes und zweites Seitenteil im Bereich ihrer Oberseiten (14) jeweils erste und zweite Gelenkelemente (20, 21) umfassen, die ein Schwenkgelenk definieren, derart, dass die Seitenteile (11, 12) um eine vorgegebene Schwenkachse (S) gegeneinander verschwenkbar sind,
**dadurch gekennzeichnet,**
**dass** im Bereich der Gelenkelemente (20, 21) Rastmittel (23, 24) vorgesehen sind, welche den Gitarrenständer in mindestens einer Schwenkposition mit einer vorbestimmten Haltekraft rastend festlegen, wobei bei Überwindung der vorbestimmten Haltekraft die festgelegte Rastposition (25 bis 29) außer Eingriff gebracht werden kann.

2. Musikinstrumentenständer nach Anspruch 1,
**dadurch gekennzeichnet,**
**dass** die Rastmittel (23, 24) eine Mehrzahl von Rastpositionen (25 bis 29) definieren, derart, dass der Gitarrenständer in einer Mehrzahl unterschiedlicher, vorzugsweise äquidistant beabstandeter Schwenkwinkelpositionen festlegbar ist.

3. Musikinstrumentenständer nach Anspruch 1 oder 2,
**dadurch gekennzeichnet,**
**dass** in einer Schwenkposition (Ruheposition) erstes und zweites Seitenteil (11, 12) minimal voneinander beabstandet und im wesentlichen parallel zueinander ausgerichtet sind.

4. Musikinstrumentenständer nach einem der Ansprüche 1 bis 3,
**dadurch gekennzeichnet,**
**dass** Schwenkwinkelbegrenzungsmittel im Bereich der Gelenkelemente (20, 21), insbesondere an den Rastmitteln oder an Lagerungselementen (30, 31) des Schwenkgelenks (22) vorgesehen sind, um ein Ausklappen des Gitarrenständers über einen vorgegebenen maximalen Öffnungswinkel zu verunmöglichen.

5. Musikinstrumentenständer nach einem der Ansprüche 1 bis 4,
**dadurch gekennzeichnet,**
**dass** mindestens eines der Rastmittel (23, 24) sich entlang eines zur Schwenkachse (S) konzentrischen Kreisbogenabschnitt erstreckend ausgebildet und ausgerichtet ist.

6. Musikinstrumentenständer nach einem der Ansprüche 1 bis 5,
**dadurch gekennzeichnet,**
**dass** die Rastmittel (23, 24) ein aufnehmendes Rastmittel (24) mit mindestens einer Rastausnehmung (30, 31, 32) sowie ein vorstehendes Rastmittel (23) mit mindestens einem Rastvorsprung (33, 34) umfassen.

7. Musikinstrumentenständer nach einem der Ansprüche 1 bis 6,
**dadurch gekennzeichnet,**
**dass** das mit Rastausnehmungen (30, 31, 32) versehene Rastmittel als Rastnut (23) und das mit Rastvorsprüngen (33, 34) versehene Rastmittel als Rastnase (24) ausgebildet ist, wobei die Rastnase (23) in der Rastnut (24) geführt ist.

8. Musikinstrumentenständer nach einem der Ansprüche 1 bis 7,
**dadurch gekennzeichnet,**
**dass** die Rastmittel (23, 24) von der Schwenkachse (S) des Schwenkgelenkes (22) weniger als 20 cm, vorzugsweise weniger als 15 cm beabstandet abgeordnet sind.

9. Musikinstrumentenständer nach einem der Ansprüche 1 bis 8,
**dadurch gekennzeichnet,**
**dass** die Rastvorsprünge (33) und die Rastausnehmung (30) in einer zur Rastausnehmung (S) des Schwenkgelenks (22) radialen Richtung miteinander verrasten.

10. Musikinstrumentenständer nach einem der Ansprüche 1 bis 9,
**dadurch gekennzeichnet,**
**dass** die Rastvorsprünge (34, 35) und die Rastausnehmungen (31, 32) in einer zur Schwenkachse (S) des Schwenkgelenks (22) parallelen Richtung miteinander verrasten.

11. Musikinstrumentenständer nach einem der Ansprüche 1 bis 10,
**dadurch gekennzeichnet,**
**dass** die Rastmittel (23, 24) überwiegend oder vollkommen aus Kunststoff bestehen.

12. Musikinstrumentenständer nach einem der Ansprüche 1 bis 11,
**dadurch gekennzeichnet,**
**dass** an den Seitenteilen (11, 12) jeweils eine Ausbuchtung (36, 37) ausgebildet ist, die zusammen eine Auflage für ein abzulegendes Musikinstrument definieren.

## Claims

1. Musical instrument stand, in particular for guitars, comprising a first side part (11) and a second side part (12), having in each case an under side (13) and an upper side (14), wherein first and second side part (11, 12) comprise in each case base elements (15 to 18) for placing the guitar stand on a floor surface (19) and wherein first and second side part in the region of their upper sides (14) comprise in each case first and second hinge elements (20, 21), which define a pivoting hinge such that the side parts (11, 12) can be pivoted with respect to one another about a preset pivoting axis (S), **characterised in that** in the region of the hinge elements (20, 21), locking means (23, 24) are provided which fix the guitar stand in at least one pivoting position in locking manner with a predetermined holding force, wherein when overcoming the predetermined holding force, the fixed locking position (26 to 29) may be disengaged.

2. Musical instrument stand according to claim 1, **characterised in that** the locking means (23, 24) define a plurality of locking positions (25 to 29) such that the guitar stand can be fixed in a plurality of different, preferably equidistantly spaced, pivoting angle positions.

3. Musical instrument stand according to claim 1 or 2, **characterised in that** in a pivoting position (rest position), first and second side part (11, 12) have minimum distance from one another and are aligned essentially parallel to one another.

4. Musical instrument stand according to one of claims 1 to 3, **characterised in that** pivoting angle limiting means are provided in the region of the hinge elements (20, 21), in particular at the locking means or at mounting elements (30, 31) of the pivoting hinge (22), in order to prevent spreading of the guitar stand over a preset maximum opening angle.

5. Musical instrument stand according to one of claims 1 to 4, **characterised in that** at least one of the locking means (23, 24) is designed and aligned to extend along a circular arc section which is concentric to the pivoting axis (S).

6. Musical instrument stand according to one of claims 1 to 5, **characterised in that** the locking means (23, 24) comprise a receiving locking means (24) with at least one locking recess (30, 31, 32) and a projecting locking means (23) with at least one locking projection (33, 34).

7. Musical instrument stand according to one of claims 1 to 6, **characterised in that** the locking means provided with locking recesses (30, 31, 32) is designed as a locking groove (23) and the locking means provided with locking projections (33, 34) as a locking nose (24), wherein the locking nose (23) is guided in the locking groove (24).

8. Musical instrument stand according to one of claims 1 to 7, **characterised in that** the locking means (23, 24) are arranged at a distance from the pivoting axis (S) of the pivoting hinge (22) of less than 20 cm, preferably less than 15 cm.

9. Musical instrument stand according to one of claims 1 to 8, **characterised in that** the locking projections (33) and the locking recess (30) lock with one another in a direction which is radial to the locking recess (S) of the pivoting hinge (22).

10. Musical instrument stand according to one of claims 1 to 9, **characterised in that** the locking projections (34, 35) and the locking recesses (31, 32) lock with one another in a direction which is parallel to the pivoting axis (S) of the pivoting hinge (22).

11. Musical instrument stand according to one of claims 1 to 10, **characterised in that** the locking means (23, 24) consist predominantly or completely of plastic.

12. Musical instrument stand according to one of claims 1 to 11, **characterised in that** in each case a bulge (36, 37), which together define a support for a musical instrument to be put down, is designed on the side parts (11, 12).

## Revendications

1. Support pour instruments de musique, en particulier pour des guitares, comprenant une première partie latérale (11) ainsi qu'une seconde partie latérale (12), avec à chaque fois un côté inférieur (13) et un côté supérieur (14),où les première et seconde parties latérales (11, 12) comprennent chacune des éléments de pied (15 à 18) pour poser le support de guitare sur un sol (19), et où les première et seconde parties latérales entourent au voisinage de leurs côtés supérieurs (14) à chaque fois des premier et second éléments d'articulation (20, 21) qui définissent une articulation pivotante de telle sorte que les parties latérales (11, 12) peuvent être amenées à pivoter autour d'un axe de pivotement prédéfini (S) l'une relativement à l'autre, **caractérisé en ce que**, dans la zone des éléments d'articulation (20, 21), des moyens d'arrêt (23, 24) sont prévus qui fixent, par enclenchement, le support de guitare dans au moins une position de pivotement avec une force de retenue prédéfinie, où lorsque la force de retenue prédéfinie est surmontée, la position d'arrêt fixée (26 à 29) peut être sortie de prise.

2. Support pour instrument de musique selon la revendication 1, **caractérisé en ce que** les moyens d'arrêt (23, 24) définissent une pluralité de positions d'arrêt (25 à 29), de telle sorte que le support de guitare peut être fixé dans une pluralité de positions d'angle de pivotement différentes, de préférence équidistantes.

3. Support pour instruments de musique selon la revendication 1 ou 2, **caractérisé en ce que** dans une position de pivotement (position de repos), les première et seconde parties latérales (11, 12) présentent un écart minimal entre elles et sont orientées sensiblement parallèlement l'une à l'autre.

4. Support pour instruments de musique selon l'une des revendications 1 à 3, **caractérisé en ce que** des moyens de délimitation de l'angle de pivotement sont prévus dans la zone des éléments d'articulation (20, 21), en particulier aux moyens d'arrêt ou aux éléments de logement (30, 31) de l'articulation pivotante (22) pour empêcher un dépliage du support de guitare au-delà d'un angle d'ouverture maximal prédéfini.

5. Support pour instruments de musique selon l'une des revendications 1 à 4, **caractérisé en ce qu'**au moins l'un des moyens d'arrêt (23, 24) s'étend et est orienté le long d'un segment d'arc de cercle concentrique qu'à l'axe de pivotement S.

6. Support pour instruments de musique selon l'une des revendications 1 à 5, **caractérisé en ce que** les moyens d'arrêt (23, 24) comprennent un moyen d'arrêt de réception (24) avec au moins un évidement d'arrêt (30, 31, 32) ainsi qu'un moyen d'arrêt saillant (23) avec au moins une saillie d'arrêt (33, 34).

7. Support pour instruments de musique selon l'une des revendications 1 à 6, **caractérisé en ce que** le moyen d'arrêt pourvu des évidements d'arrêt (30, 31, 32) est réalisé comme rainure d'arrêt (23), et le moyen d'arrêt muni des saillies d'arrêt (33, 34) comme bec d'arrêt (23), où le bec d'arrêt (23) est guidé dans la rainure d'arrêt (24).

8. Support pour instruments de musique selon l'une des revendications 1 à 7, **caractérisé en ce que** les moyens d'arrêt (23, 24) sont espacés de l'axe de pivotement (S) de l'articulation pivotante (22) de moins de 20 cm, de préférence de moins de 15 cm.

9. Support pour instruments de musique selon l'une des revendications 1 à 8, **caractérisé en ce que** les saillies d'arrêt (33) et l'évidement d'arrêt (30) s'enclenchent dans une direction radiale à l'évidement d'arrêt (S) de l'articulation pivotante (22).

10. Support pour instruments de musique selon l'une des revendications 1 à 9, **caractérisé en ce que** les saillies d'arrêt (34, 35) et les évidements d'arrêt (31, 32) s'enclenchent dans une direction parallèle à l'axe de pivotement (S) de l'articulation pivotante (22).

11. Support pour instruments de musique selon l'une des revendications 1 à 10, **caractérisé en ce que** les moyens d'arrêt (23, 24) sont majoritairement ou entièrement en matériau synthétique.

12. Support pour instruments de musique selon l'une des revendications 1 à 11, **caractérisé en ce qu'**aux parties latérales (11, 12) est réalisé à chaque fois un creux (36, 37), qui définissent ensemble un appui pour un instrument de musique à poser.
